# FASCICULE DE BREVET EUROPEEN

(11) **EP 0 359 677 B1**
(45) Date de publication et mention de la délivrance du brevet: **26.05.1993**
(21) Numéro de dépôt: 89420324.9
(22) Date de dépôt: 06.09.1989
(51) Int. Cl.: H02B 1/052

(54) **Dispositif d'encliquetage d'un appareil électrique modulaire sur un rail support profile**
Vorrichtung zur Befestigung eines modularen elektrischen Geräts auf einem Profilträger
Device to attach a modular electrical apparatus onto a profile support rail

(30) Priorité: 16.09.1988 FR 8812231
(43) Date de publication de la demande: 21.03.1990
(73) Titulaire: MERLIN GERIN, F-38240 Meylan (FR)
(72) Inventeur: Pellicano, Joseph, F-38050 Grenoble Cedex (FR); Burrial, Maurice, F-38050 Grenoble Cedex (FR); Lecorre, Noel, F-38050 Grenoble Cedex (FR)
(74) Mandataire: Hecké, Gérard

(56) Documents cités:
- EP-A- 0 184 143
- DE-A- 2 337 351
- FR-A- 2 388 154

## Description

Dispositif d'encliquetage d'un appareil électrique modulaire à boîtier isolant sur un rail support profilé, comprenant un socle de fixation du boîtier ayant un évidement en forme de rainure délimitée par une saignée et un cran de réception des premier et deuxième bords opposés du rail support fixe, et un verrou agencé en coulisseau déplaçable par l'action d'un talon de préhension entre une position verrouillée dans laquelle un bec d'accrochage assure l'encliquetage du deuxième bord du rail support dans le cran, et une position déverrouillée de libération dudit deuxième bord, le boîtier étant équipé sur ses faces latérales opposées encadrant le socle, d'une paire de bornes d'entrée et de sortie à vis de serrage pour le raccordement électrique de l'appareil, respectivement à une languette d'un peigne ou jeu de barres d'alimentation, et à un départ.

Le montage et le démontage d'un tel appareil à socle encliquetable s'effectue facilement lorsque la borne d'entrée est reliée à un conducteur individuel d'alimentation, par exemple un câble ou toute autre liaison électrique souple. La situation est différente dans les coffrets pour installations électriques importantes ayant dans chaque rangée une pluralité d'appareils disposés côte-à-côte le long du rail et alimentés par leurs bornes d'entrée au moyen d'un peigne de raccordement commun. Ce peigne présente une certaine rigidité qui impose obligatoirement son débranchement en cas de remplacement d'un appareil défectueux situé dans la partie intermédiaire de la rangée. En plus du temps de réparation important, se pose le problème de la continuité électrique des départs associés aux autres appareils de la rangée.

Une solution connue à ce problème consiste à prévoir dans le socle une pièce de retenue escamotable coopérant avec l'un des bords du rail pour autoriser le retrait individuel d'un appareil défectueux (voir brevets EP 184.143 et DE 3.316.389). La présence dans le socle de cette pièce additionnelle complique notablement la fabrication du boîtier isolant de l'appareil.

L'objet de l'invention consiste à réaliser un appareil électrique modulaire facilement interchangeable au moyen d'un boîtier isolant standard.

Le dispositif d'encliquetage selon l'invention est caractérisé en ce que le socle de fixation comporte une encoche de dégagement du deuxième bord du rail support, suite à un basculement relatif du boîtier après déverrouillage du verrou et desserrage de la vis de la borne d'entrée, ladite encoche étant agencée entre le cran de l'évidement et la partie du socle équipée du verrou, de manière à présenter un décalage angulaire prédéterminé par rapport à la saignée et le fond longitudinal de l'évidement. L'encoche vient de moulage avec le boîtier isolant et présente une profondeur supérieure ou égale à celle de la saignée opposée coopérant avec le premier bord du rail support.

La présence de cette encoche du côté du verrou permet de résoudre facilement le problème d'interchangeabilité de l'appareil, sans avoir recours à une pièce de retenue additionnelle dans le socle de fixation du boîtier.

Le peigne est séparé de la face latérale du boîtier par un intervalle autorisant ledit basculement relatif de l'appareil. Le peigne comporte une gaine profilée en matériau isolant ayant des cavités de logement des barres conductrices d'alimentation, et au moins une lèvre élastique en forme de jupe s'étendant dans ledit intervalle en direction de la face latérale.

La partie du socle située à l'opposé du verrou comporte une rampe située au voisinage de la saignée et ayant une inclinaison prédéterminée par rapport au fond de l'évidement pour réduire le pivotement du boîtier lorsque le premier bord du rail échappe à la saignée et que le deuxième bord du rail se trouve à l'intérieur de l'encoche de dégagement.

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue en élévation d'une rangée d'appareils électriques modulaires encliquetés sur un rail support et alimentés par un peigne de raccordement;
- la figure 2 montre une vue en coupe d'un appareil selon la ligne I-I de la figure 1;
- la figure 3 représente une vue partielle, à échelle agrandie, du socle de raccordement de l'appareil représenté à la figure 2;
- les figures 4 à 7 sont des vues identiques à celle de la fig. 2, lors du démontage de l'appareil;
- la figure 8 est une vue identique à celle de la fig. 6 d'une variante;
- la figure 9 illustre une vue en élévation du peigne de la fig. 8.

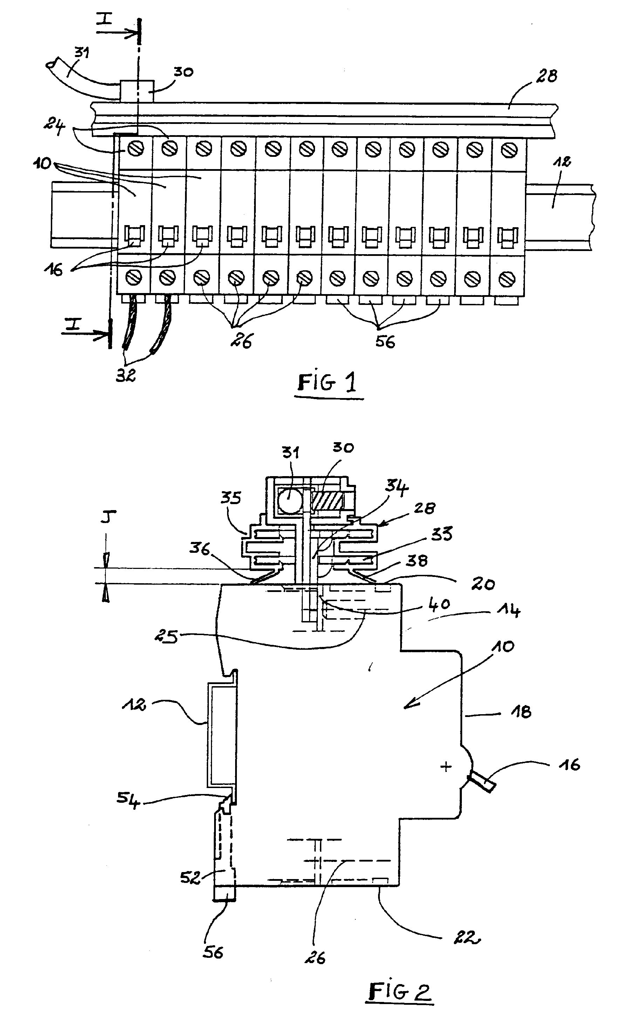

Sur les figures 1 et 2, une pluralité d'appareils électriques modulaires 10, notamment des disjoncteurs, interrupteurs, contacteurs ou coupe-circuits à fusibles, sont juxtaposés par encliquetage sur un rail support 12, notamment à profil DIN symétrique. Les appareils 10 sont accolés par leurs grandes faces latérales pour former une rangée horizontale s'étendant selon la direction du rail 12.

Chaque appareil modulaire 10 comporte un boîtier 14 isolant moulé de forme parallélépipédique, renfermant le mécanisme de coupure et de protection (non représenté), et une manette 16 de commande manuelle, laquelle fait saillie d'un orifice de la face avant 18. Les faces latérales opposées étroites 20, 22 du boîtier 14 sont équipées respectivement d'une borne d'entrée 24 et d'une borne de sortie 26 pour autoriser le branchement électrique de l'appareil 10. Les bornes 24, 26 sont du type à cage et vis de serrage 25 (montrée en pointillé sur la figure 2).

L'ensemble des bornes d'entrée 24 sont reliées à un peigne de raccordement 28 agencé pour former un jeu de barres monobloc d'alimentation en parallèle des différents appareils 10. La liaison électrique du peigne avec le disjoncteur de tête (non représenté) s'effectue au moyen d'un connecteur 30 à câble d'alimentation 31.

La borne de sortie 26 de chaque appareil 10 est raccordée par un câble de liaison 32 à un départ.

Sur les figures, les appareils 10 sont constitués par des disjoncteurs unipolaires, et le peigne 28 possède une seule barre conductrice 33 équipée d'une pluralité de languettes (34, fig. 2) en forme de dents, engagées dans les cages des bornes 24. L'écartement entre les languettes 34 successives correspond au pas des appareils 10 unipolaires, c'est-à-dire 17,5 mm. Cet écartement est doublé, triplé et quadruplé lors d'une alimentation d'appareils bipolaires, tripolaires ou tétrapolaires.

Le peigne 28 comporte une gaine profilée 35, en matériau isolant plastique, ayant quatre cavités pour le logement des barres conductrices 33 d'alimentation. Dans le cas d'une alimentation d'appareils bipolaires, deux barres 33 sont insérées dans la gaine 35. Pour des appareils tripolaires et tétrapolaires, le peigne 28 est doté respectivement de trois et quatre barres 33. L'ensemble gaine isolée 35 et barres 33 en cuivre, confèrent une certaine rigidité à la structure monobloc isolée du peigne 28, lequel prend appui sur la face 20 des appareils 10 au moyen d'une paire de lèvres élastiques 36, 38 en forme de jupes faisant partie intégrante de la gaine 35 isolante. Les languettes 34, de sections rectangulaires, sont déformées par pliage en équerre pour s'étendre selon une direction longitudinale perpendiculaire à celle de la barre 33 associée. En position raccordée du peigne 28 d'alimentation (voir figure 2), les languettes 34 viennent en contact dans les cages des bornes 24 avec les plages de contact 40 correspondantes (en pointillé) des appareils 10. Le serrage entre les languettes 34 et les plages de contact 40 est assuré par les vis 25 des bornes d'entrée 24. Les lèvres 36, 38 s'étendent dans un intervalle ou jeu "J" ménagé entre la gaine 35 et le boîtier 14.

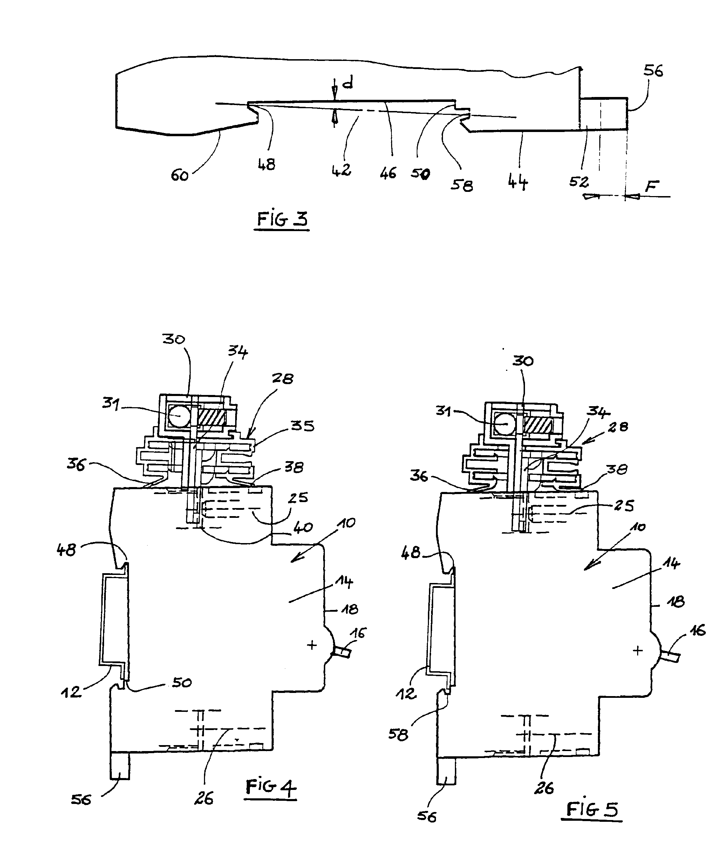

La figure 3 montre le socle de fixation 42 situé sur la face postérieure 44 du boîtier 14 isolant de chaque appareil 10. Le socle 42 comporte un évidement 46 d'encliquetage en forme de rainure rectangulaire à fond aplati s'étendant sur toute la largeur du boîtier 14. Le fond de l'évidement 46 comporte à l'une des extrémités une saignée 48 de retenue du premier bord inférieur du rail support 12, et à l'autre extrémité un cran 50 rectiligne de réception du deuxième bord opposé du rail support 12. Un verrou 52 bistable en forme de coulisseau est monté à coulissement limité dans un logement (non représenté) du socle 42 entre une position de verrouillage (fig. 2) et une position de déverrouillage (fig. 4 à 7).

Dans la position de verrouillage du verrou 52, l'appareil 10 reste encliqueté sur le rail support 12 grâce à l'action de blocage du bec 54 d'accrochage du verrou 52 sur le bord inférieur du rail 12 (fig. 2). L'écartement entre les bords inférieur et supérieur du rail 12 correspond sensiblement à la distance longitudinale séparant le cran 50 rectiligne de la saignée 48. Il en résulte un encastrement sans jeu du rail 12 dans l'intervalle délimité par la saignée 48 et le cran 50.

A l'opposé du bec 54 d'accrochage du verrou 52, se trouve un talon de préhension 56 dans lequel peut être introduit un tournevis pour faire passer (voir flèche F sur figure 3) le verrou 52 de la position de verrouillage (en traits pointillés) vers la position de déverrouillage (en traits forts), et réciproquement.

Une encoche 58 semi-ouverte de dégagement est prévue dans le socle 42 à l'opposé de la saignée 48 entre le cran 50 et le bord de l'évidement 46 situé du côté du verrou 52. La profondeur de l'encoche 58 est au moins égale ou légèrement supérieure à celle de la saignée 48. La présence de l'encoche 58 en-dessous du cran 50 engendre un léger décalage angulaire "d" par rapport à la saignée 48 et le fond longitudinal de l'évidement 46 (voir figure 3).

Dans la position encliquetée de l'appareil 10 sur le rail support 12 (voir figure 2), les lèvres 36, 38 élastiques de la gaine 35 isolante s'étendent symétriquement par rapport au plan médian du peigne 28, et leurs extrémités se trouvent en appui sur la face 20. Les languettes 34 du peigne 28 sont dirigées perpendiculairement à la face 20.

Le démontage individuel d'un appareil 10 défectueux dans la zone intermédiaire de la rangée horizontale (fig. 1) s'effectue facilement de la manière illustrée aux figures 4 à 7.

La présence du rail support 12 fixe et du peigne 28 de raccordement des autres appareils 10 restant en service, nécessite le démontage par l'avant de l'appareil 10 défectueux.

Le desserrage de la vis 25 associée à la borne 24 et le déplacement du verrou 52 vers la position déverrouillée autorisent la première phase de démontage, illustrée à la figure 4. L'intervalle "J" entre la gaine 35 et la face 20 permet alors un premier mouvement de pivotement de l'appareil 10 dans le sens inverse des aiguilles d'une montre, le bord supérieur du rail 12 restant logé provisoirement dans le fond de la saignée 48. Le cran 50 de l'évidement 46, étant libéré de l'action de blocage du bec 54, quitte le bord inférieur du rail 12 pour venir se positionner en regard de l'encoche 58 de dégagement. Cette course de pivotement du boîtier 14 correspond sensiblement au décalage angulaire "d" de l'encoche 58, et entraîne la compression modérée de la lèvre 38 de droite.

Dans la deuxième phase de démontage de la figure 5, le boîtier 14 est déplacé en translation vers la gaine 35 selon une direction parallèle au plan incliné passant par la saignée 48 et l'encoche 58. La compression maximum des lèvres 36, 38 élastiques autorise ce deuxième mouvement de dégagement en translation après rattrapage du jeu "J". Il en résulte un recul du rail 12 de la saignée 48, et son introduction dans l'encoche 58 opposée.

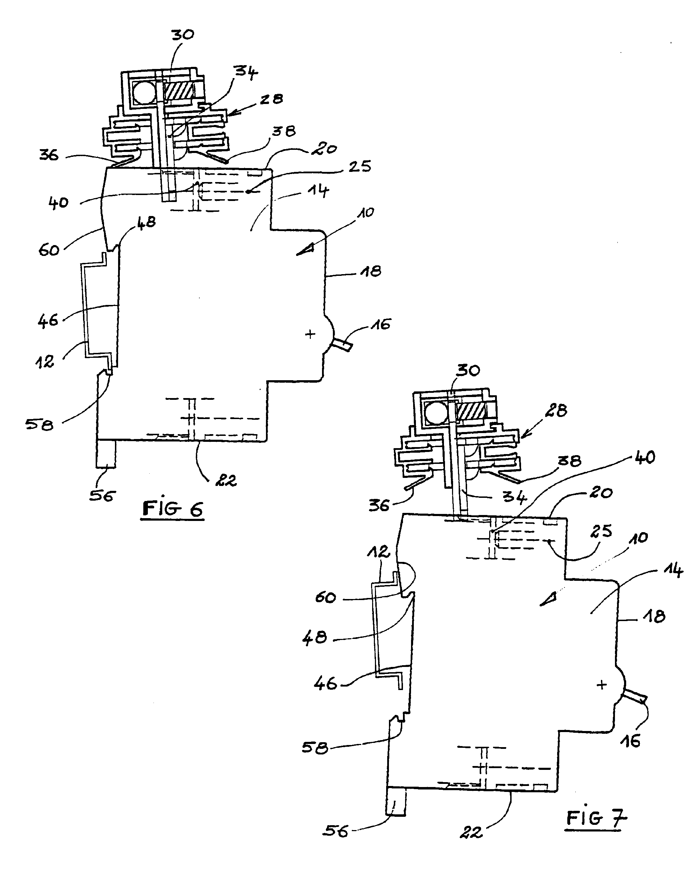

Dans la troisième phase de la figure 6, est ensuite opéré un troisième mouvement de pivotement limité du boîtier 14 dans le sens des aiguilles d'une montre, le bord inférieur du rail support 12 restant logé dans l'encoche 58 de dégagement. Le bord supérieur du rail 12 échappe totalement à toute action antagoniste du socle 42. L'inclinaison de la rampe 60, située à l'opposé de l'encoche 58 entre la saignée 48 de l'évidement 46 et la face 20, réduit notablement l'angle de débattement du troisième mouvement de pivotement inverse du boîtier 14.

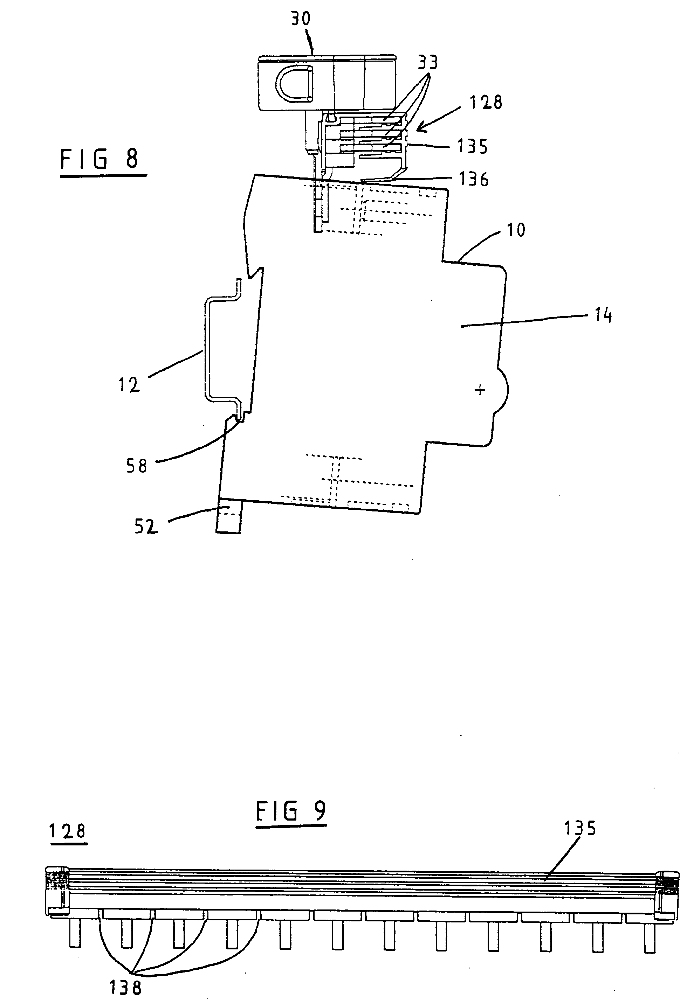

Il suffit ensuite dans la quatrième phase de tirer l'appareil 10 vers le bas pour assurer le retrait du rail support 12 de l'encoche 58 de dégagement (fig. 7). La cage de la borne 25 s'écarte de la languette 34 correspondante du peigne 28 qui reste fixe. L'appareil défectueux 10 est alors désolidarisé de la rangée, et peut être remplacé par un nouveau appareil.

L'opération de remontage de l'appareil 10 nouveau sur le rail 12 et le peigne 28 s'opère en sens inverse du démontage.

Durant les opérations de démontage et de remontage d'un appareil 10 intermédiaire, tous les autres appareils 10 adjacents de la rangée restent alimentés en permanence par le peigne 28.

Selon la variante des figures 8 et 9, un peigne 128 de raccordement d'un appareil tripolaire 10 comporte une gaine 135 isolante équipée de trois cavités superposées pour le logement des barres 33 conductrices. La gaine 135 possède une seule lèvre 136 élastique autorisant le démontage de l'appareil 10.

La lèvre 136 et le bord opposé de la gaine 135 comporte une succession de saignées 138 régulièrement réparties selon la direction longitudinale avec des intervalles correspondant au pas des appareils 10, par exemple 18 mm. La gaine 135 du peigne 128 forme alors une boîte à coupe. Il suffit à l'électricien de compter le nombre de pôles à ponter, et de scier le peigne 128 à la saignée 138 correspondante. Un tel agencement supprime toute opération de mesure par règle.

## Revendications

1. Dispositif d'encliquetage d'un appareil électrique (10) modulaire à boîtier (14) isolant sur un rail support (12) profilé, comprenant un socle de fixation (42) du boîtier (14) ayant un évidement (46) en forme de rainure délimitée par une saignée (48) et un cran (50) de réception des premier et deuxième bords opposés du rail support (12) fixe, et un verrou (52) agencé en coulisseau déplaçable par l'action d'un talon de préhension (56) entre une position verrouillée dans laquelle un bec d'accrochage (54) assure l'encliquetage du deuxième bord du rail support (12) dans le cran (50), et une position déverrouillée de libération dudit deuxième bord, le boîtier (14) étant équipé sur ses faces latérales (20, 22) opposées encadrant le socle (42), d'une paire de bornes d'entrée (24) et de sortie (26) à vis de serrage (25) pour le raccordement électrique de l'appareil (10), respectivement à une languette (34) d'un peigne (28, 128) ou jeu de barres d'alimentation, et à un départ, caractérisé en ce que le socle de fixation (42) comporte une encoche (58) de dégagement du deuxième bord du rail support (12), suite à un basculement relatif du boîtier (14) après déverrouillage du verrou (52) et desserrage de la vis (25) de la borne d'entrée (24), ladite encoche (58) étant agencée entre le cran (50) de l'évidement (46) et la partie du socle (42) équipée du verrou (52), de manière à présenter un décalage angulaire prédéterminé par rapport à la saignée (48) et le fond longitudinal de l'évidement (46).

2. Dispositif d'encliquetage selon la revendication 1, caractérisé en ce que l'encoche (58) vient de moulage avec le boîtier (14) isolant et présente une profondeur supérieure ou égale à celle de la saignée (48) opposée coopérant avec le premier bord du rail support (12).

3. Dispositif d'encliquetage selon la revendication 1 ou 2, caractérisé en ce que le peigne (28) est séparé de la face latérale (20) du boîtier (14) par un intervalle (J) autorisant ledit basculement relatif de l'appareil (10).

4. Dispositif d'encliquetage selon la revendication 3, caractérisé en ce que le peigne (28) comporte une gaine (35, 135) profilée en matériau isolant ayant des cavités de logement des barres conductrices (33) d'alimentation, et au moins une lèvre (36, 38, 136) élastique en forme de jupe s'étendant dans ledit intervalle (J) en direction de la face latérale (20).

5. Dispositif d'encliquetage selon la revendication 3 ou 4, caractérisé en ce que la partie du socle (42) située à l'opposé du verrou (52) comporte une rampe (60) située au voisinage de la saignée (48) et ayant une inclinaison prédéterminée par rapport au fond de l'évidement (46) pour réduire le pivotement du boîtier (14) lorsque le premier bord du rail (12) échappe à la saignée (48) et que le deuxième bord du rail (12) se trouve à l'intérieur de l'encoche (58) de dégagement.

6. Dispositif d'encliquetage selon l'une des revendications 1 à 5, caractérisé en ce que le cran (50) du socle (42) de fixation est formé par une arête rectiligne perpendiculaire au fond de l'évidement (46), et que l'écartement entre les premier et deuxième bords du rail support (12) correspond sensiblement à la distance longitudinale séparant le cran (50) de la saignée (48).

7. Dispositif d'encliquetage selon la revendication 5 ou 6, caractérisé en ce que la saignée (48) est disposée entre le cran (50) et la rampe (60) du socle de fixation (42), le verrou (52) étant agencé du côté de la borne de sortie (26).

8. Dispositif d'encliquetage selon l'une des revendications 4 à 7, caractérisé en ce que la gaine (35, 135) du peigne (28, 128) comporte une succession de saignées (138) réparties à intervalles réguliers correspondant au pas polaire des appareils (10) modulaires, de manière à former une boîte à coupe.

## Patentansprüche

1. Schnappmechanismus zur Montage eines modularen Schaltgeräts (10) mit Isolierstoffgehäuse (14) auf einer Profilschiene (12), bestehend aus einem Gehäuse-Einbausockel (12) mit nutförmiger Aussparung (46), die durch eine Keilführung (48) und einen Auflageabsatz (50) zur Aufnahme der ersten und der gegenüberliegenden zweiten Kante der feststehenden Profilschiene (12) begrenzt wird, sowie einem als Gleitschieber ausgeführten Riegel (52), der mit Hilfe einer Zugöse (56) zwischen einer Verriegelungsstellung, in der die Einrastung der zweiten Kante der Profilschiene (12) durch eine Sicherungsnase (54) gewährleistet wird, und einer Entriegelungsstellung zur Freigabe der genannten zweiten Kante verschoben werden kann, wobei das Gehäuse (14) an der den Sockel (42) begrenzenden oberen und unteren Schmalseite (20, 22) mit einer Eingangs- bzw. Ausgangsklemme (24, 26) mit Klemmschraube (25) zur elektrischen Verbindung des Schaltgeräts (10) mit einem Steg (34) einer Kammschiene (28, 128) oder einer Einspeise-Sammelschiene bzw. einem Abgang bestückt ist, dadurch gekennzeichnet, daß der Einbausockel (42) eine Rechteckvertiefung (58) zur Aufnahme der zweiten Kante der Profilschiene (12) nach dem Abkippen des Schaltgeräts (14) und vorherigem Lösen des Riegels (52) und der Klemmschraube (25) der Eingangsklemme (24) aufweist, wobei die genannte Vertiefung (58) zwischen dem Auflageabsatz (50) der Aussparung (46) und dem mit dem Riegel (52) bestückten Teil des Sockels (42) angeordnet ist, so daß ein bestimmter Winkelversatz in bezug auf die Keilführung (48) und die in Längsrichtung gesehene Grundfläche der Aussparung (46) entsteht.

2. Schnappmechanismus nach Anspruch 1, dadurch gekennzeichnet, daß die Rechteckvertiefung (58) in das Isolierstoffgehäuse (14) eingeformt ist und die gleiche oder eine größere Tiefe aufweist als die gegenüberliegende, mit der ersten Kante der Profilschiene (12) zusammenwirkende Keilführung (48).

3. Schnappmechanismus nach Anspruch 1 oder 2, dadurch gekennzeichnet, daß die Kammschiene (28) in einem bestimmten Abstand (J) über der oberen Schmalseite (20) des Gehäuses verläuft, wodurch das erwähnte Abkippen des Schaltgeräts (10) ermöglicht wird.

4. Schnappmechanismus nach Anspruch 3, dadurch gekennzeichnet, daß die Kammschiene von einem Isolierstoff-Profilmantel (35, 135) umgeben ist, in dem sich Hohlräume zur Aufnahme von Einspeiseschienen (33) befinden, und mindestens ein elastisches Spreizelement (36, 38, 136) aufweist, das den genannten Abstand (J) durchragt und in Richtung der oberen Schmalseite (20) des Gehäuses gesehen schräg nach außen verläuft.

5. Schnappmechanismus nach Anspruch 3 oder 4, dadurch gekennzeichnet, daß der dem Riegel (52) gegenüberliegende Teil des Einbausockels (42) in Höhe der Keilführung (48) eine Schräge (60) mit einer bestimmten Neigung in bezug auf die Grundfläche der Aussparung (46) aufweist, um den erforderlichen Abkippwinkel des Gehäuses (14) zu reduzieren, nachdem die Freigabe der ersten Kante der Profilschiene (12) durch die Keilführung (48) erfolgt ist und sich die zweite Kante der Profilschiene (12) in der Rechteckvertiefung (58) befindet.

6. Schnappmechanismus nach einem der Ansprüche 1 bis 5, dadurch gekennzeichnet, daß der Auflageabsatz (50) des Einbausockels (42) als geradlinige, rechtwinklig zur Grundfläche der Aussparung (46) verlaufende Kante ausgebildet ist und daß der Abstand zwischen der ersten und der zweiten Kante der Profilschiene (12) annähernd dem Abstand zwischen dem rechtwinkligen Auflageabsatz (50) und der Keilnut (48) entspricht.

7. Schnappmechanismus nach Anspruch 5 oder 6, dadurch gekennzeichnet, daß die Keilführung (48) zwischen dem Auflageabsatz (50) und der Schräge (60) des Einbausockels (42) angeordnet ist und sich der Riegel (52) auf der Seite der Ausgangsklemme (26) befindet.

8. Schnappmechanismus nach einem der Ansprüche 4 bis 7, dadurch gekennzeichnet, daß der Isolierstoffmantel (35, 135) der Kammschiene (28, 128) in regelmäßigen Abständen mit Aussparungen (138) versehen ist, so daß eine Art ablängbarer Verteilerkasten entsteht, wobei die Zwischenabstände dem Teilungsmaß der modularen Schaltgeräte (10) entsprechen.

## Claims

1. A device for clipping a modular electrical switchgear device (10) with insulating case (14) onto a profiled support rail (12), comprising a fixing base (42) of the case (14) having a hollowed recess (46) in the form of a slot bounded by a groove (48) and a catch (50) for receiving first and second opposite edges of the fixed support rail (12), and a locking bolt (52) arranged as a slider movable by the action of a gripping heel (56) between a locked position in which a latching nose (54) ensures clipping of the second edge of the support rail (12) in the catch (50), and an unlocked position releasing said second edge, the case (14) being equipped on its opposite side panels (20, 22) on each side of the base (42) with a pair of input (24) and output (26) terminals with clamping screws (25) for electrical connection of the switchgear device (10) respectively to a tab (34) of a supply comb (28, 128) or busbar, and to a feeder, characterized in that the fixing base (42) comprises a notch (58) for release of the second edge of the support rail (12), following relative rocking of the case (14) after unlocking of the bolt (52) and loosening of the screw (25) of the input terminal (24), said notch (58) being arranged between the catch (50) of the recess (46) and the part of the base (42) equipped with the bolt (52), in such a way as to present a predetermined angular offset with respect to the groove (48) and the longitudinal bottom of the recess (46).

2. The clipping device according to claim 1, characterized in that the notch (58) is cast with the insulating case (14) and has a depth greater than or equal to that of the opposite groove (48) cooperating with the first edge of the support rail (12).

3. The clipping device according to claim 1 or 2, characterized in that the comb (28) is separated from the side panel (20) of the case (14) by a gap (J) enabling said relative rocking of the switchgear device (10).

4. The clipping device according to claim 3, characterized in that the comb (28) comprises a profiled sheath (35, 135) made of insulating material having cavities for housing conducting supply bars (33), and at least one flexible lip (36, 38, 136) in the form of a skirt extending in said gap (J) in the direction of the side panel (20).

5. The clipping device according to claim 3 or 4, characterized in that the part of the base (42) situated opposite the bolt (52) comprises a ramp (60) located near the groove (48) and having a predetermined slope with respect to the bottom of the recess (46) to reduce pivoting of the case (14) when the first edge of the rail (12) comes out of the groove (48) and the second edge of the rail (12) is located inside the release notch (58).

6. The clipping device according to one of the claims 1 to 5, characterized in that the catch (50) of the fixing base (42) is formed by a straight edge perpendicular to the bottom of the recess (46), and that the distance between the first and second edges of the support rail (12) corresponds appreciably to the longitudinal distance separating the catch (50) from the groove (48).

7. The clipping device according to claim 5 or 6, characterized in that the groove (48) is arranged between the catch (50) and the ramp (60) of the fixing base (42), the bolt (52) being arranged on the same side as the output terminal (26).

8. The clipping device according to one of the claims 4 to 7, characterized in that the sheath (35, 135) of the comb (28, 128) comprises a succession of grooves (138) located at regular intervals corresponding to the polar pitch of the modular switchgear devices (10), so as to form a cutting box.
